# FASCICULE DE BREVET EUROPEEN

(11) **EP 3 724 587 B1**
(45) Date de publication et mention de la délivrance du brevet: **26.07.2023**
(21) Numéro de dépôt: 18842532.6
(22) Date de dépôt: 14.12.2018
(51) Int. Cl.: F28C 1/00, F28C 3/00, H01M 10/625, H01M 10/6569, H01M 10/6567

(54) **DISPOSITIF DE RÉGULATION DE TEMPÉRATURE D'UNE BATTERIE À L'AIDE D'UN FLUIDE DIÉLECTRIQUE ET PACK-BATTERIE COMPRENANT UN TEL DISPOSITIF**
VORRICHTUNG ZUR REGELUNG DER TEMPERATUR EINER BATTERIE UNTER VERWENDUNG EINER DIELEKTRISCHEN FLÜSSIGKEIT UND BATTERIESATZ MIT SOLCH EINER VORRICHTUNG
DEVICE FOR REGULATING THE TEMPERATURE OF A BATTERY USING A DIELECTRIC FLUID, AND BATTERY PACK COMPRISING SUCH A DEVICE

(30) Priorité: 14.12.2017 FR 1762159
(43) Date de publication de la demande: 21.10.2020
(73) Titulaire: Valeo Systemes Thermiques-THS, 78322 Le Mesnil Saint Denis Cedex (FR)
(72) Inventeur: AZZOUZ, Kamel, 78322 LE MESNIL SAINT DENIS CEDEX (FR); MAMMERI, Amrid, 78322 LE MESNIL SAINT DENIS CEDEX (FR)
(74) Mandataire: Valeo Systèmes Thermiques
(86) Numéro de dépôt international: PCT/FR2018/053294
(87) Numéro de publication internationale: WO 2019/115972

(56) Documents cités:
- EP-A1- 2 993 435
- EP-A1- 3 166 175
- WO-A1-2011/137111
- WO-A1-2013/006796
- WO-A1-2013/123269

## Description

L'invention concerne un dispositif de régulation de température de cellules de batterie à l'aide d'un fluide diélectrique. L'invention concerne également un pack batterie comprenant ledit dispositif ainsi qu'une pluralité de cellules de batterie. Elle est en particulier destinée à équiper des véhicules automobiles, en particulier des véhicules automobiles à motorisation électrique ou hybride. WO2013/006796 A1 divulgue un dispositif de régulation de température selon le préambule de la revendication 1.

La part de marché des véhicules électriques étant de plus en plus importantes, les problématiques de refroidissement/chauffage des packs batterie qui les équipent deviennent des enjeux stratégiques. L'objectif est de concevoir un dispositif de gestion thermique des batteries le plus performant, efficient et économique possible.

Souvent pour répondre au besoin de refroidissement/chauffage des batteries électriques, on utilise des « échangeurs de chaleurs» consistants en une plaque froide avec circulation d'un liquide de refroidissement, les plaques étant au contact des cellules à refroidir. Ce genre de techniques conduit à un refroidissement non homogène des batteries et limite ainsi de leur durée de vie et leur performance. Ces dispositifs présentent en outre une résistance thermique élevée en raison des épaisseurs de matière présentes entre le liquide de refroidissement et les cellules.

Une solution proposée pour répondre à cette problématique consiste en une immersion des batteries électriques dans un fluide caloporteur diélectrique. Cette immersion peut être réalisée avec une circulation de fluide ou en condition statique avec changement de phase.

Ces deux techniques sont performantes d'un point de vue thermique en particulier en raison du contact direct établi entre le liquide et les cellules mais présentent le désavantage d'utiliser une grande quantité de liquide diélectrique, ce qui augmente le coût et le poids du pack batterie.

L'invention vise à résoudre ces problèmes techniques en proposant un dispositif de régulation de température d'une batterie comprenant au moins une cellule de stockage d'énergie, ledit dispositif comprenant un circuit de fluide diélectrique, ledit circuit comprenant des moyens pour arroser la surface de ladite cellule à l'aide dudit fluide diélectrique.

Par moyen pour arroser on entend tout type de moyen permettant de mettre en contact le fluide diélectrique avec la ou les surfaces des cellules de batteries autrement qu'en immergeant lesdites cellules dans ledit fluide diélectrique.

Il s'agit en particulier de moyen d'aspersion, de moyen de projection ou de tous moyens aptes à produire une circulation dudit fluide de sorte à mettre au contact le fluide diélectrique avec la surface des cellules, sous la forme d'un film de fluide, de jets, de gouttelettes d'une brumisation ou autre.

Ce dispositif permet non seulement de récupérer de grande quantité de chaleur et d'assurer un refroidissement homogène par contact direct du fluide diélectrique et des cellules à refroidir mais permet également de limiter la quantité de fluide diélectrique et donc le poids du dispositif en éliminant le bain de liquide diélectrique connu dans les dispositifs précédents.

L'invention peut également comprendre l'une quelconque des caractéristiques suivantes, prises individuellement ou selon toute combinaison techniquement possible :
- les moyens pour arroser comprennent des buses d'aspersion du fluide diélectrique, notamment en phase liquide,
- les buses d'aspersion sont configurées pour être placées entre chaque cellule de batterie de sorte à projeter le fluide diélectrique sur des faces latérales des cellules,
- les buses d'aspersion sont configurées pour être placées au-dessus de chaque cellule de batterie de sorte à projeter le fluide diélectrique sur des faces supérieures des cellules,
- les buses d'aspersion sont configurées de sorte à produire un jet de fluide diélectrique,
- le fluide est destiné à se vaporiser au moins en partie à la surface des cellules,
- les buses d'aspersion sont configurées de sorte à pulvériser le fluide diélectrique sous forme de fines gouttes, destinées à s'écouler à la surface des cellules,
- le dispositif comprend un réservoir configuré pour être disposé sous les cellules et apte à récupérer, sous phase liquide, le fluide diélectrique envoyé à la surface des cellules de batterie,
- le dispositif comprend une pompe configurée pour aspirer ledit fluide diélectrique dans le réservoir et le mettre sous pression dans ledit circuit de fluide diélectrique,
- le dispositif comprend au moins un moyen de refroidissement du fluide diélectrique,
- le moyen de refroidissement du fluide diélectrique comprend un échangeur de chaleur situé dans le circuit de fluide diélectrique,
- le moyen de refroidissement du fluide diélectrique comprend un échangeur de chaleur situé dans le réservoir,
- le moyen de refroidissement comprend un condenseur configuré de sorte à condenser le fluide diélectrique pour passer de phase vapeur en phase liquide et à faire ruisseler ladite ledit fluide jusqu'au réservoir,
- le condenseur est configuré pour la circulation d'un fluide réfrigérant destiné à échanger de la chaleur avec le fluide diélectrique,
- le moyen de refroidissement comprend un échangeur de chaleur permettant un échange de chaleur entre un fluide réfrigérant et un fluide de refroidissement,
- le condenseur est configuré pour la circulation dudit fluide de refroidissement en vue d'échanger de la chaleur avec le fluide diélectrique,
- le dispositif comprend un moyen de chauffage dudit liquide diélectrique,
- le moyen de chauffage est situé dans le réservoir.

L'invention concerne également un pack batterie comprenant le dispositif décrit plus haut ainsi qu'une pluralité de cellules de batteries.

L'invention sera mieux comprise et d'autres détails, caractéristiques et avantages de l'invention apparaîtront à la lecture de la description suivante faite à titre d'exemple non limitatif et en référence aux dessins annexés dans lesquels :
- la figure 1, illustre de façon schématique en vue de coupe un premier mode de réalisation d'un dispositif selon l'invention,
- la figure 2, illustre de façon schématique en vue de coupe un deuxième mode de réalisation d'un dispositif selon l'invention,
- la figure 3, illustre de façon schématique en vue de coupe un troisième mode de réalisation d'un dispositif selon l'invention,
- la figure 4, illustre de façon schématique en vue de coupe un quatrième mode de réalisation d'un dispositif selon l'invention,
- la figure 5, illustre de façon schématique en vue de coupe un cinquième mode de réalisation d'un dispositif selon l'invention,
- la figure 6, est une vue en perspective partiellement écorchée d'un pack-batterie selon l'invention.

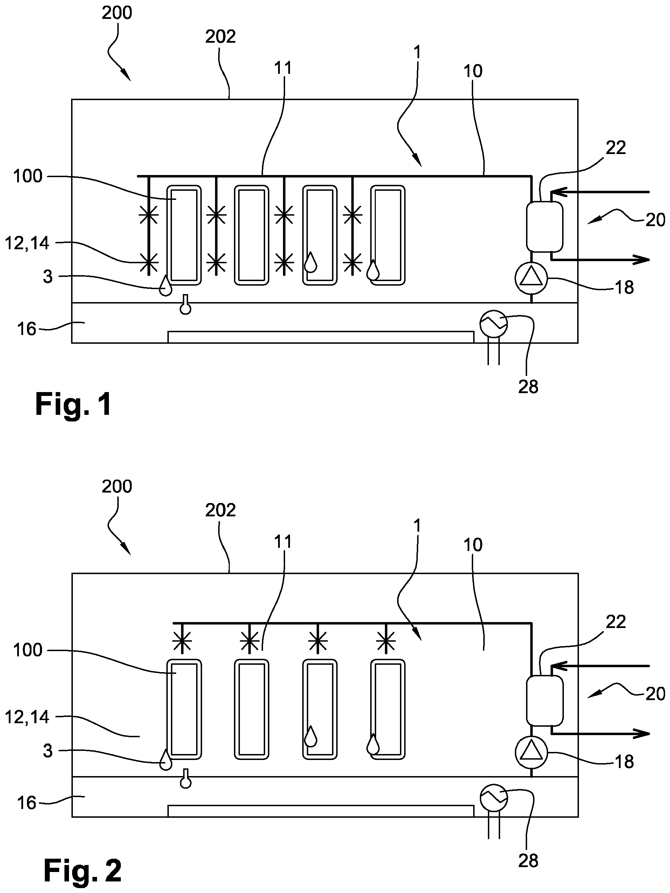

Comme illustré à la figure 1, l'invention concerne un dispositif 1 de régulation de la température d'une batterie. Ladite batterie comprend au moins une cellule 100 de stockage d'énergie. Il s'agit notamment d'une batterie de véhicule électrique. La batterie comprend ici quatre cellules 100 mais il s'agit uniquement d'un exemple schématique et la batterie pourra comprendre un bien plus grand nombre de cellules.

Pour leur bon fonctionnement, il est souhaité que la température des batteries soit maintenue dans un intervalle de valeur restreint, notamment entre 20 et 40°C. Le dispositif conforme à l'invention a précisément pour fonction d'effectuer une telle régulation de température.

Ledit dispositif 1 comprend un circuit 10 de fluide diélectrique ainsi que des moyens 12 pour arroser la surface de la cellule 100 à l'aide dudit fluide diélectrique 3. Le circuit 10 de fluide diélectrique peut être formé par une pluralité de canaux ou rampes d'alimentation 11 en fluide diélectrique 3 alimentant les moyens 12 pour arroser.

Ledit circuit 10 est un circuit fermé dans lequel le fluide diélectrique est amené à changer de phase, ou non, ceci en fonction des différents modes de réalisation développés dans la suite.

Les moyens 12 permettent de réguler efficacement la température des cellules 100 de batterie en les arrosant tout en limitant la quantité de fluide diélectrique 3 utilisé. En effet, le dispositif 1 selon l'invention nécessite une quantité de fluide 3 bien moindre que dans un dispositif dans lequel les cellules sont immergées dans un fluide diélectrique.

Avantageusement, les moyens 12 pour arroser comprennent des buses d'aspersion 14 du fluide diélectrique, en phase liquide. Lesdites buses d'aspersion 14 permettent d'asperger du fluide 3 en direction de l'une quelconque des surface de la ou des cellules 100 de batterie. L'aspersion du fluide 3 par les buses 14 peut être monodirectionnelle ou poly directionnelle.

Selon un mode de réalisation représenté à la figure 1, les buses d'aspersion 14 sont configurées pour être placées entre chaque cellule 100 de batterie de sorte à projeter le fluide diélectrique 3 sur des faces latérales des cellules 100. Cette disposition des buses d'aspersion 14 permet de couvrir une surface maximale de cellules 100 et ainsi d'optimiser la régulation de la température.

Selon un autre mode de réalisation représenté à la figure 2, les buses d'aspersion 14 sont configurées pour être placées au-dessus de chaque cellule 100 de batterie de sorte à projeter le fluide diélectrique 3 sur des faces supérieures des cellules 100. Il a été observé par la demanderesse que les zones des cellules 100 subissant les plus importantes montées en température lors de l'utilisation de la batterie sont les zones supérieures, au niveau des connexions électriques. Cette disposition des buses d'aspersion 14 permet ainsi de cibler plus précisément les zones de températures élevées et donc d'optimiser la régulation de la température.

Selon un mode de réalisation, lesdites buses d'aspersion 14 sont configurées de sorte à produire un jet 5 de fluide diélectrique 3, en phase liquide.

Le jet 5 de fluide diélectrique 3 peut être de puissance variable. Ledit fluide 3 peut ainsi venir percuter la surface de la cellule 100. Ledit fluide 3 peut alternativement venir ruisseler le long de la surface de ladite cellule 100 sans impact. Le jet 5 peut être monodirectionnelle ou poly directionnelle.

Selon un autre mode de réalisation, les buses d'aspersion 14 sont configurées de sorte à pulvériser le liquide diélectrique 3 sous forme de fines gouttes 7. La taille des gouttes 7 peut être variable. Les buses d'aspersion peuvent notamment être configurées de sorte à réaliser une brumisation du fluide 3. La pulvérisation du fluide 3 peut être monodirectionnelle ou poly directionnelle.

Le jet 5 et les gouttes 7 de fluide diélectrique ne sont pas représentés sur les figures.

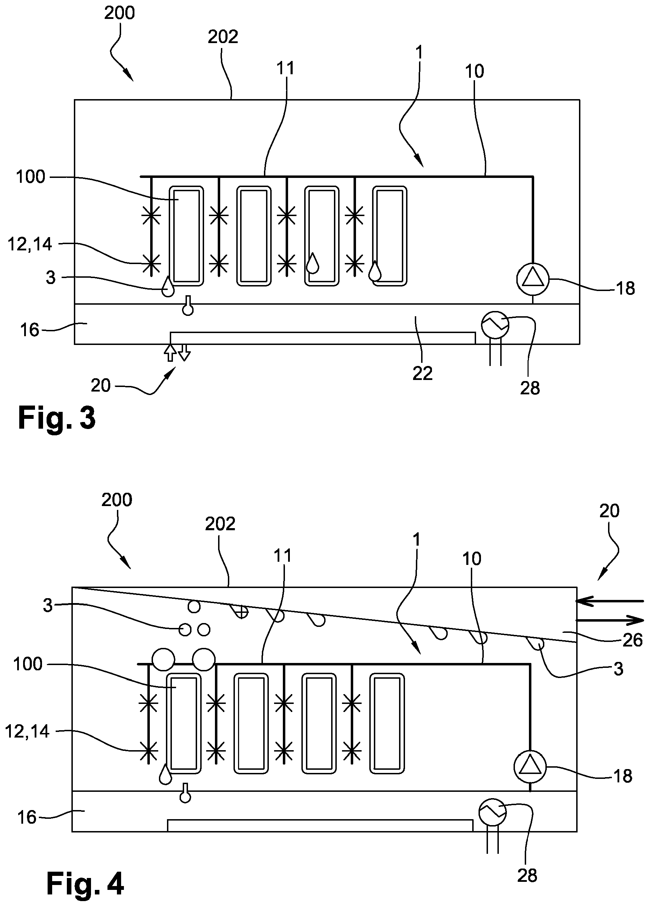

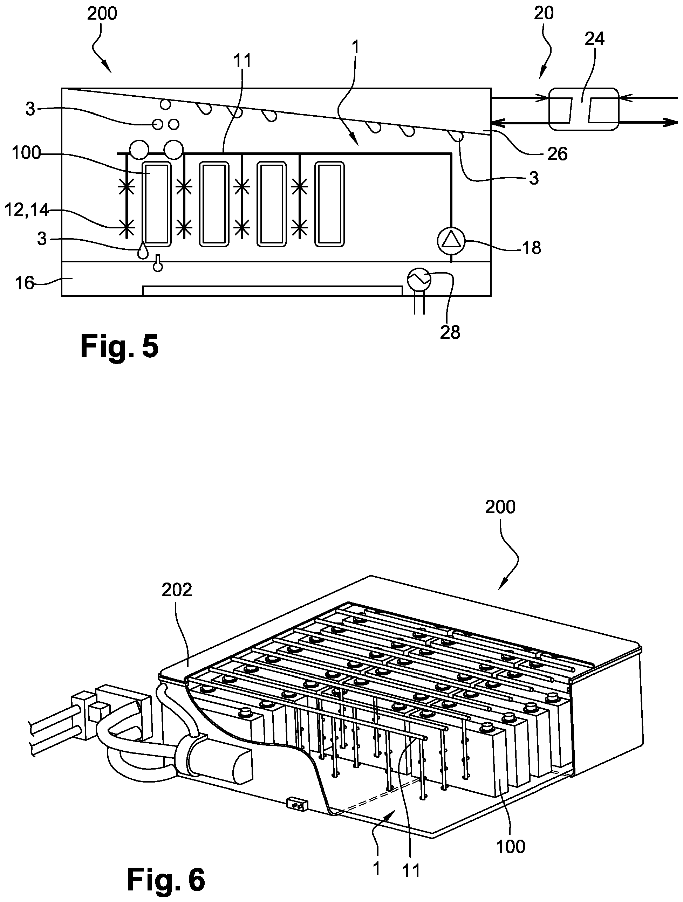

En cours d'utilisation de la batterie, les cellules 100 présentent une température supérieure à la température du fluide 3. Ledit fluide 3 peut ainsi être destiné à se vaporiser au moins en partie à la surface des cellules 100 (figures 4 et 5 en particulier).

Le dispositif 1 peut également comprendre un réservoir 16 complétant le circuit 10 et configuré pour être disposé sous les cellules 100. Ledit réservoir 16 est apte à récupérer le liquide diélectrique 3 envoyé à la surface des cellules 100 de batterie.

Le dispositif 1 peut également comprendre une pompe 18 configurée pour aspirer ledit fluide diélectrique 3 dans le réservoir 16 et le mettre sous pression dans ledit circuit 10 de fluide diélectrique.

Une fois le fluide 3 arrosé à la surface des cellules 100, ledit fluide ruisselle jusqu'au réservoir 16. Le fluide 3 ainsi récupéré par le réservoir 16 est alors aspiré par une pompe 18 puis remis sous pressions en aval dans le circuit 10.

Ainsi, le fluide diélectrique 3 se trouve successivement sous pression puis à la pression d'un logement 202 accueillant les cellules 100 le long du circuit 10. Ici, il est à la pression du logement 202 au contact des cellules 100 puis dans le réservoir 18 avant d'être à nouveau sous pression sous l'action de la pompe 18 dans la ou les rampes 11 et les buses d'aspersion 14. Le fluide diélectrique 3 est alors constamment réutilisé. Il est ainsi possible d'utiliser une faible quantité de fluide diélectrique 3, en particulier comparé aux dispositifs dans lesquels les cellules sont immergées dans le liquide diélectrique.

Avantageusement, le dispositif 1 comprend au moins un moyen de refroidissement 20 du fluide diélectrique 3. Lorsque le fluide 3 entre au contact d'une cellule 100, ledit fluide récupère la chaleur dissipée par la cellule de batterie. Le fluide 3 est alors refroidi par ledit moyen de refroidissement 20 avant d'être à nouveau mis au contact avec la surface des cellules 100. Le fluide 3 subit ainsi un cycle de changement d'état et/ou de montée et de descente en température.

Selon un mode de réalisation représenté à la figure 1, le moyen de refroidissement 20 comprend un échangeur de chaleur 22 situé dans le circuit 10 de fluide diélectrique ici en aval de la pompe 18. Ainsi, après voir subit une montée en température suite au contact avec une cellule 100 le fluide 3 est récupéré par le réservoir 16, aspiré par la pompe 18 puis il subit une descente en température sous l'action de l'échangeur de chaleur 22. Le fluide 3 est alors transporté dans le circuit jusqu'aux buses d'aspersions, entre à nouveau au contact des cellules 100 et subit à nouveau une montée en température.

Selon un mode de réalisation représenté en figure 3, le moyen de refroidissement 20 du fluide diélectrique 3 comprend un échangeur de chaleur 22 situé dans le réservoir. Le refroidissement du fluide diélectrique 3 est ici réalisé en amont de la pompe 18. Il est ensuite aspiré par la pompe 18. Cette disposition permet d'utiliser un échangeur de chaleur 22 sous la forme d'une plaque qui peut avoir une surface d'échange de chaleur de dimensions plus importantes que dans le cas d'un échangeur de chaleur situé en aval de la pompe 18. Ainsi, l'échange de température entre le fluide diélectrique 3 et l'échangeur de chaleur 22 est amélioré.

Selon un mode de réalisation représenté à la figure 4, le fluide diélectrique 3 subit un changement de phase et se vaporise, au moins partiellement, lorsqu'il entre en contact avec la surfaces de cellules 100. Le moyen de refroidissement 20 selon ce mode de réalisation comprend un condenseur 26 configuré de sorte à condenser le fluide diélectrique 3 pour passer de phase vapeur en phase liquide et à faire ruisseler ledit fluide 3 jusqu'au réservoir 16 notamment grâce à un plan incliné. Le fluide 3 en phase liquide dans le réservoir 16 est alors aspiré par la pompe 18. Le condenseur 26 permet de condenser le fluide diélectrique 3 grâce à une différence de température entre le condenseur et le fluide diélectrique en phase vapeur.

Avantageusement, le condenseur 26 est configuré pour la circulation d'un fluide réfrigérant destiné à échanger de la chaleur avec le fluide diélectrique 3. Le réfrigérant provient d'un détendeur et circule dans le condenseur 26 de manière à abaisser la température du condenseur. Le condenseur 26 permet alors de condenser le fluide diélectrique 3 gazeux.

Selon un mode de réalisation représenté à la figure 5, le moyen de refroidissement 20 comprend en outre un échangeur de chaleur 24 permettant un échange de chaleur entre un fluide réfrigérant et un fluide de refroidissement. Le condenseur 26 selon ce mode de réalisation est configuré pour la circulation du fluide de refroidissement en vue d'échanger de la chaleur avec le fluide diélectrique 3 en phase vapeur.

Lorsque les cellules présentent une température trop faible il peut être avantageux d'augmenter leur température. Lors d'une utilisation d'une batterie dans des conditions de température faibles, par exemple inférieur à 0°C, il est avantageux de pouvoir augmenter la température des cellules 100 de batterie afin d'obtenir plus rapidement des performances optimales.

Ainsi, le dispositif 1 selon la présente invention peut comprendre un moyen de chauffage 28 du fluide diélectrique 3. Le moyen de chauffage 28 permet alors de chauffer le fluide 3 qui va à son tour chauffer les cellules 100 jusqu'à une température optimale d'utilisation. Ledit moyen de chauffage 28 peut notamment être une résistance.

Comme illustré sur les figures 1 à 5, le moyen de chauffage 28 du fluide diélectrique 3 est ici situé dans le circuit 10, avantageusement situé dans le réservoir 16.

La présente invention concerne également un pack-batterie 200 comprenant un dispositif 1 décrit plus haut ainsi qu'une pluralité de cellules 100 de batteries.

A la figure 6, on visualise mieux la pluralité de cellules 100 et la pluralité de rampe 11 d'alimentation du pack. Les rampes sont ici situées en parallèle.

## Revendications

1. Dispositif (1) de régulation de température d'une batterie comprenant au moins une cellule (100) de stockage d'énergie, ledit dispositif (1) comprenant un circuit (10) de fluide diélectrique, ledit circuit (10) comprenant des moyens (12) pour arroser la surface de ladite cellule (100) à l'aide dudit fluide diélectrique (3), **caractérisé en ce que** les moyens (12) pour arroser comprennent des buses d'aspersion (14) du fluide diélectrique (3) en phase liquide.

2. Dispositif (1) selon la revendication 1, **caractérisé en ce que** les buses d'aspersion (14) sont configurées pour être placées entre chaque cellule (100) de batterie de sorte à projeter le fluide diélectrique (3) sur des faces latérales des cellules (100).

3. Dispositif (1) selon la revendication 1, **caractérisé en ce que** les buses d'aspersion (14) sont configurées pour être placées au-dessus de chaque cellule (100) de batterie de sorte à projeter le fluide diélectrique (3) sur des faces supérieures des cellules (100).

4. Dispositif (1) selon l'une des revendications 1 à 3, **caractérisé en ce que** les buses d'aspersion (14) sont configurées de sorte à produire un jet (5) de fluide diélectrique (3), ledit fluide (3) étant destiné à se vaporiser au moins en partie à la surface des cellules (100).

5. Dispositif (1) selon l'une des revendications 1 à 3, **caractérisé en ce que** les buses d'aspersion (14) sont configurées de sorte à pulvériser le fluide diélectrique (3) sous forme de fines gouttes (7), destinées à s'écouler à la surface des cellules (100).

6. Dispositif (1) selon l'une des revendications précédentes, **caractérisé en ce qu'**il comprend un réservoir (16) configuré pour être disposé sous les cellules (100) et apte à récupérer, sous phase liquide, le fluide diélectrique (3) envoyé à la surface des cellules (100) de batterie ainsi qu'une pompe (18) configurée pour aspirer ledit fluide diélectrique (3) dans le réservoir (16) et le mettre sous pression dans ledit circuit (10) de fluide diélectrique.

7. Dispositif (1) selon la revendication 6, **caractérisé en ce qu'**il comprend au moins un moyen de refroidissement (20) du fluide diélectrique (3).

8. Dispositif (1) selon la revendication 7, **caractérisé en ce que** le moyen de refroidissement (20) du fluide diélectrique (3) comprend un échangeur de chaleur (22) situé dans le circuit (10) de fluide diélectrique.

9. Dispositif (1) selon la revendication 7, **caractérisé en ce que** le moyen de refroidissement (20) du fluide diélectrique (3) comprend un échangeur de chaleur (22) situé dans le réservoir (16).

10. Dispositif (1) selon la revendication 7, **caractérisé en ce que** le moyen de refroidissement (20) comprend un condenseur (26) configuré de sorte à condenser le fluide diélectrique (3) pour passer de phase vapeur en phase liquide et à faire ruisseler ledit fluide (3) jusqu'au réservoir (16).

11. Dispositif (1) selon la revendication 10, **caractérisé en ce que** le condenseur (26) est configuré pour la circulation d'un fluide réfrigérant destiné à échanger de la chaleur avec le fluide diélectrique (3).

12. Dispositif (1) selon la revendication 10, **caractérisé en ce que** le moyen de refroidissement (20) comprend en outre un échangeur de chaleur (24) permettant un échange de chaleur entre un fluide réfrigérant et un fluide de refroidissement, ledit condenseur (26) étant configuré pour la circulation dudit fluide de refroidissement en vue d'échanger de la chaleur avec le fluide diélectrique (3).

13. Dispositif (1) selon l'une des revendications précédentes, **caractérisé en ce qu'**il comprend un moyen de chauffage (28) dudit fluide diélectrique (3).

14. Pack-batterie (200) comprenant le dispositif (1) selon l'une des revendications précédentes ainsi qu'une pluralité de cellules (100) de batteries.

## Patentansprüche

1. Vorrichtung (1) zur Regelung der Temperatur einer Batterie, umfassend mindestens eine Energiespeicherzelle (100), wobei die Vorrichtung (1) einen Kreislauf (10) für dielektrisches Fluid umfasst, wobei der Kreislauf (10) Mittel (12) zum Besprühen der Oberfläche der Zelle (100) mit dem dielektrischen Fluid (3) umfasst, **dadurch gekennzeichnet, dass** die Mittel (12) zum Besprühen Sprühdüsen (14) für das dielektrische Fluid (3) in flüssiger Phase umfassen.

2. Vorrichtung (1) nach Anspruch 1, **dadurch gekennzeichnet, dass** die Sprühdüsen (14) dazu ausgelegt sind, zwischen jeder Batteriezelle (100) angeordnet zu sein, um das dielektrische Fluid (3) auf Seitenflächen der Zellen (100) zu sprühen.

3. Vorrichtung (1) nach Anspruch 1, **dadurch gekennzeichnet, dass** die Sprühdüsen (14) dazu ausgelegt sind, über jeder Batteriezelle (100) angeordnet zu sein, um das dielektrische Fluid (3) auf die oberen Flächen der Zellen (100) zu sprühen.

4. Vorrichtung (1) nach einem der Ansprüche 1 bis 3, **dadurch gekennzeichnet, dass** die Sprühdüsen (14) dazu ausgelegt sind, einen Strahl (5) von dielektrischem Fluid (3) zu erzeugen, wobei das Fluid (3) dazu bestimmt ist, zumindest teilweise auf der Oberfläche der Zellen (100) zu verdampfen.

5. Vorrichtung (1) nach einem der Ansprüche 1 bis 3, **dadurch gekennzeichnet, dass** die Sprühdüsen (14) dazu ausgelegt sind, das dielektrische Fluid (3) in Form von feinen Tropfen (7) zu versprühen, die dazu bestimmt sind, auf der Oberfläche der Zellen (100) zu fließen.

6. Vorrichtung (1) nach einem der vorangehenden Ansprüche, **dadurch gekennzeichnet, dass** sie einen Behälter (16) umfasst, der dazu bestimmt ist, unter den Zellen (100) angeordnet zu sein, und dazu geeignet ist, das auf die Oberfläche der Batteriezellen (100) geleitete dielektrische Fluid (3) in flüssiger Phase aufzufangen, sowie eine Pumpe (18), die dazu ausgelegt ist, das dielektrische Fluid (3) im Behälter (16) anzusaugen und es im Kreislauf (10) für das dielektrische Fluid unter Druck zu setzen.

7. Vorrichtung (1) nach Anspruch 6, **dadurch gekennzeichnet, dass** sie mindestens ein Mittel (20) zum Kühlen des dielektrischen Fluids (3) umfasst.

8. Vorrichtung (1) nach Anspruch 7, **dadurch gekennzeichnet, dass** das Mittel (20) zum Kühlen des dielektrischen Fluids (3) einen Wärmetauscher (22) umfasst, der sich im Kreislauf (10) für das dielektrische Fluid befindet.

9. Vorrichtung (1) nach Anspruch 7, **dadurch gekennzeichnet, dass** das Mittel (20) zum Kühlen des dielektrischen Fluids (3) einen Wärmetauscher (22) umfasst, der sich im Behälter (16) befindet.

10. Vorrichtung (1) nach Anspruch 7, **dadurch gekennzeichnet, dass** das Kühlmittel (20) einen Kondensator (26) umfasst, der dazu ausgelegt ist, das dielektrische Fluid (3) aus der Dampfphase in die flüssige Phase zu kondensieren und das Fluid (3) zum Behälter (16) strömen zu lassen.

11. Vorrichtung (1) nach Anspruch 10, **dadurch gekennzeichnet, dass** der Kondensator (26) für die Zirkulation eines Kältemittels ausgelegt ist, das zum Austausch von Wärme mit dem dielektrischen Fluid (3) bestimmt ist.

12. Vorrichtung (1) nach Anspruch 10, **dadurch gekennzeichnet, dass** das Kühlmittel (20) ferner einen Wärmetauscher (24) umfasst, der einen Wärmeaustausch zwischen einem Kältemittel und einem Kühlfluid ermöglicht, wobei der Kondensator (26) für die Zirkulation des Kühlfluids zum Wärmeaustausch mit dem dielektrischen Fluid (3) ausgelegt ist.

13. Vorrichtung (1) nach einem der vorangehenden Ansprüche, **dadurch gekennzeichnet, dass** sie ein Mittel (28) zum Heizen des dielektrischen Fluid (3) umfasst.

14. Batteriepack (200), umfassend die Vorrichtung (1) nach einem der vorangehenden Ansprüche sowie mehrere Batteriezellen (100).

## Claims

1. Device (1) for the thermal regulation of a battery comprising at least one energy storage cell (100), said device (1) comprising a dielectric-fluid circuit (10), said circuit (10) comprising irrigating means (12) for wetting the surface of said cell (100) with said dielectric fluid (3), **characterized in that** the irrigation means (12) comprise sprinkler nozzles (14) for sprinkling the dielectric fluid (3), in the liquid phase.

2. Device (1) according to Claim 1, **characterized in that** the sprinkler nozzles (14) are configured to be positioned between each of the battery cells (100) so as to spray the dielectric fluid (3) onto the lateral faces of the cells (100).

3. Device (1) according to Claim 1, **characterized in that** the sprinkler nozzles (14) are configured to be positioned above each of the battery cells (100) so as to spray the dielectric fluid (3) onto the upper faces of the cells (100).

4. Device (1) according to one of Claims 1 to 3, **characterized in that** the sprinkler nozzles (14) are configured in such a way as to produce a jet (5) of dielectric fluid (3), said fluid (3) being intended to vaporize at least partially at the surface of the cells (100) .

5. Device (1) according to one of Claims 1 to 3, **characterized in that** the sprinkler nozzles (14) are configured in such a way as to spray the dielectric fluid (3) in the form of fine droplets (7), intended to flow over the surface of the cells (100).

6. Device (1) according to one of the preceding claims, **characterized in that** it comprises a reservoir (16) configured to be positioned under the cells (100) and able to recover, in liquid phase, the dielectric fluid (3) that has been sent to the surface of the battery cells (100), and a pump (18) configured to draw said dielectric fluid (3) from the reservoir (16) and pressurize it in said dielectric-fluid circuit (10).

7. Device (1) according to Claim 6, **characterized in that** it comprises at least one cooling means (20) for cooling the dielectric fluid (3).

8. Device (1) according to Claim 7, **characterized in that** the cooling means (20) for cooling the dielectric fluid (3) comprises a heat exchanger (22) situated in the dielectric-fluid circuit (10).

9. Device (1) according to Claim 7, **characterized in that** the cooling means (20) for cooling the dielectric fluid (3) comprises a heat exchanger (22) situated in the reservoir (16).

10. Device (1) according to Claim 7, **characterized in that** the cooling means (20) comprises a condenser (26) configured to condense the dielectric fluid (3) in order to change from the vapour phase to the liquid phase and cause said fluid (3) to trickle as far as the reservoir (16) .

11. Device (1) according to Claim 10, **characterized in that** the condenser (26) is configured for the circulation of a refrigerant fluid intended to exchange heat with the dielectric fluid (3).

12. Device (1) according to Claim 10, **characterized in that** the cooling means (20) further comprises a heat exchanger (24) allowing an exchange of heat between a refrigerant fluid and a coolant fluid, said condenser (26) being configured for the circulation of said coolant fluid for the purposes of exchanging heat with the dielectric fluid (3).

13. Device (1) according to one of the preceding claims, **characterized in that** it comprises a heating means (28) for heating said dielectric fluid (3).

14. Battery pack (200) comprising the device (1) according to one of the preceding claims and a plurality of battery cells (100).
